(19) **Europäisches Patentamt / European Patent Office / Office européen des brevets**

(11) **EP 1 487 189 B1**

(12) **EUROPEAN PATENT SPECIFICATION**

(45) Date of publication and mention
of the grant of the patent:
**17.11.2010 Bulletin 2010/46**

(51) Int Cl.:
***H04N 1/32*** *(2006.01)*

(21) Application number: **04252824.0**

(22) Date of filing: **14.05.2004**

(54) **Image forming apparatus and method and storage medium therefor**

Bilderzeugungsgerät und Verfahren zur Bildherstellung und Speichermedium dazu

Méthode et appareil de formation d'images et support de stockage d'informations correspondant

(84) Designated Contracting States:
**DE ES FR GB IT NL**

(30) Priority: **15.05.2003 JP 2003136737**

(43) Date of publication of application:
**15.12.2004 Bulletin 2004/51**

(73) Proprietor: **Ricoh Company, Ltd.**
**Tokyo 143-8555 (JP)**

(72) Inventors:
- **Kawamoto, Hiroyuki**
  **Kawasaki-shi**
  **Kanagawa (JP)**
- **Miyamoto, Isao**
  **Yamato-shi**
  **Kanagawa (JP)**
- **Arai, Hiroshi**
  **Kawaguchi-shi**
  **Saitama (JP)**

- **Ohkawa, Satoshi**
  **Nishitokyo-shi**
  **Tokyo (JP)**
- **Tone, Takeharu**
  **Tokyo (JP)**
- **Sugiyama, Naoki**
  **Kawasaki-shi**
  **Kanagawa (JP)**
- **Nishita, Taira**
  **Tokyo (JP)**
- **Ohyama, Maki**
  **Tokyo (JP)**

(74) Representative: **Leeming, John Gerard**
**J.A. Kemp & Co.**
**14 South Square**
**Gray's Inn**
**London WC1R 5JJ (GB)**

(56) References cited:
**EP-A- 0 845 713       EP-A- 1 475 952**
**US-A- 6 069 706       US-A1- 2002 087 764**
**US-A1- 2003 123 104**

## Description

The present invention relates to an image formation apparatus, a program, and a storage medium.

Description of the Related Art

A function of network scanning is widely known, wherein a digital copier and an image reader are connected to a network, image data are read by the digital copier and a scanner of the image reader scanning an original image, and the image data are distributed to terminals that are connected to the network, such as computers (PCs).

For example, patent reference 1 (below) proposes an extension box based on the architecture of a general-purpose computer system, wherein an original image is scanned by an image input unit of an image formation apparatus, data of the scanned image are held by a hard disk drive unit (scanning box) of the extension box, and the data in the scanning box are shared by computers connected to the network.

A process for using the scanning box function is as follows. First, scanning parameters, such as resolution, gradation, a scale factor, a reading side, image size, and a place of storage, are chosen, and an original image is read. Then, the read image data are provided to an image processing unit for processing the image according to the scanning parameters. However, since the printout of the image is not contemplated, it is not necessary to generate a data format for a printout system, and accordingly, the color system conversion from the RGB system to the CMYK system, gradation compensation, and compression processing of the image data are omitted. Then, after the image processing the image data are provided to the extension box. The extension box holds the image data received in the scanning box, which is served by a predetermined disk area of the hard disk drive unit. When all the image data are received and held, the image data in the scanning box are available to the computers in the network.

[Patent reference 1]

JP, 2000-333026, A

[Problem(s) to be solved by the Invention]

However, according to the technology disclosed by the patent reference 1, when the image data that an external PC, and the like receives from the digital copier are to be printed out by the digital copier, 'the printing is performed using a printer driver that is set up by the PC for driving the digital copier. For this reason, even if the same digital copier outputs the same image, there is a difference in the image quality between the image that is "copied" by the digital copier, and the image "printed" out by the same digital copier based on the data distributed by the network scanner. This is a problem to be solved.

Specifically, when copying by the digital copier, it is often determined whether the image to be copied contains exclusively characters, exclusively patterns, or a combination of characters and patterns, and a halftone process according to the determination is performed before supplying the image data to the printer engine. Under this situation, if printing is performed by the external PC based on the image data provided from the digital copier, the printer driver installed in the PC governs the printing. For this reason, there are cases wherein all images (whether characters only, patterns only, or a combination thereof) are treated as patterns, rather than characters, and the corresponding halftone process is performed. Accordingly, image quality of the characters of the "printed" image tends to be degraded as compared with the "copied" image.

Further, if a PC serving as a client selects scanning parameters (such as resolution, gradation, a scale factor, reading side, image size, and destination for holding), image data scanned and read are provided to the image processing unit, are processed according to the scanning parameters, and are held by the hard disk. For this reason, the data format of the image data held by the hard disk cannot be converted. Due to this, when the image is required to be in another format, the image has to be scanned again. This poses another problem to be solved.

Further, the image data held by the hard disk are often in a format peculiar to the digital copier (exclusive.format), and are often compressed by an algorithm peculiar to the digital copier (exclusive algorithm) for efficiently conserving the hard disk storage space. When this is the case, another problem is in that the image data cannot be used by PCs that use general-purpose application software.

US 6,069,706 discloses an image processing apparatus comprising image processing means, image forming means and data conversion means.

It is a general object of the present invention to provide an image formation apparatus, a computer-executable program, and a storage medium that substantially obviate one or more of the problems caused by the limitations and disadvantages of the related art.

A specific object of the present invention is to provide an image formation apparatus, a computer-executable program, and a storage medium whereby the quality of a finally produced image is the same for both image data inside the image formation apparatus, and image data provided from an external source, such as a PC.

Another specific object of the present invention is to provide an image formation apparatus, a computer-executable program, and a storage medium whereby image data held by the image formation apparatus may be used by an external client PC, and the like; and the image data are made available in different formats.

Features and advantages of the present invention are set forth in the description that follows, and in part will become apparent from the description and the accompanying drawings, or may be learned by practice of the invention according to the teachings provided in the description. Objects as well as other features and advantages of the present invention will be realized and attained by an image formation apparatus, a computer-executable program, and a storage medium particularly pointed out in the specification in such full, clear, concise, and exact terms as to enable a person having ordinary skill in the art to practice the invention.

To achieve these and other advantages and in accordance with the objects of the invention, as embodied and broadly described herein, the present invention provides as follows.

[Means for Solving the Problem]

The image formation apparatus of the present invention is equipped with a printer engine for forming an image on a medium, and a communication interface for communicating with an external source, and includes image processing means for carrying out a predetermined image process on image data to be used for the image formation; image formation means for printing an image by the printer engine based on the processed image data; first receiving means for receiving the image data and information as to what kind of image processes are to be performed on the image data, from the external source through the communication interface; first storage means for holding the received image data and the information; and first data format conversion means for converting the data format of the image data from a first data format to a second data format, wherein the image processing means select kinds of the image processes to be applied to the image data according to the contents of the information received by the first receiving means and computer-executable program thereof.

In this manner, the quality of the printed image of the image data provided from the external source can be the same as the printed image of the image data held in the image formation apparatus.

An aspect of the present invention provides the image formation apparatus further equipped with an image reading apparatus for reading a desired original image, which image formation apparatus includes second storage means for holding the image data read by the image reading apparatus in the second data format.

In this manner, the image read by the image reading apparatus is available to an external client PC, and the like.

The image processing means is capable of selecting the kinds of the image processes according to the kinds of the image data that are read by the image reading apparatus and held in the second data format.

In this manner, an adequate image process is selected according to the kinds of the image data that are either read by the image reading apparatus or received from the external source such that, in either case, the same image quality is available.

Another aspect of the present invention provides the image formation apparatus that further includes second storage means for holding the image data in the second data format, second receiving means for receiving a request for transmitting the image data to a predetermined destination, second data format conversion means for converting the data format of the image data held by the second storage means from the second data format to the first data format, and transmitting means for transmitting the converted image data to the predetermined destination.

Accordingly, the image data held by the image formation apparatus are made available to an external client PC with the data format of the image data being converted as required. Further, the image data are available to multiple users in a data format as required.

An aspect of the present invention provides a halftone process in the image process performed by the image formation apparatus.

Since the halftone process is available not only to image data held by the image formation apparatus, but also to image data from an external source, the same level of image quality can be provided.

An aspect of the present invention provides an image density (darkness) setting process in the image process performed by the image formation apparatus.

Since the image density setting process is available not only to image data held by the image formation apparatus, but also to image data from an external source, the same level of image quality can be provided.

An aspect of the present invention provides the image formation apparatus wherein the data format conversion means convert the data format between the first data format and the second data format.

Accordingly, the image data can be communicated between the image formation apparatus, the external client PC, and the like in an appropriate data format.

An aspect of the present invention provides the image formation apparatus wherein a general-purpose data format serves as the first data format and the second data format.

Accordingly, image data can be communicated between the image formation apparatus, the external client PC, and the like in the general-purpose data format.

An aspect of the present invention provides the image formation apparatus wherein the second data format is a data format that is peculiar to the image formation apparatus (exclusive data format), and the first data format is a general-purpose data format.

Accordingly, image data can be communicated between the image formation apparatus, the external client PC, and the like in the general-purpose data format, and the exclusive data format as adequate.

An aspect of the present invention provides the image formation apparatus wherein the exclusive data format serves as the first data format and the second data format.

Accordingly, image data can be communicated between the image formation apparatus, the external client PC, and the like in the exclusive data format.

An aspect of the present invention provides the image formation apparatus wherein the first data format conversion means and the second data format conversion means change the color space of image data for the first data format and the second data format.

Accordingly, image data can be communicated between the image formation apparatus, the external client PC, and the like with the color space of the image data being changed as appropriate.

An aspect of the present invention provides the image formation apparatus wherein the first data format conversion means and the second data format conversion means use different resolutions of image data for the first data format and the second data format.

Accordingly, image data can be communicated between the image formation apparatus, the external client PC, and the like with the resolution of the image data being changed as appropriate.

An aspect of the present invention provides the image formation apparatus wherein the first data format conversion means and the second data format conversion means apply space filtering to one of the image data in the first data format and the image data in the second data format.

Accordingly, image data can be communicated between the image formation apparatus, the external client PC, and the like with an appropriate space filtering process being performed.

An aspect of the present invention provides the image formation apparatus wherein the first data format conversion means and the second data format conversion means apply gamma compensation to one of the image data in the first data format and the image data in the second data format.

Accordingly, image data can be communicated between the image formation apparatus, the external client PC, and the like with an appropriate gamma compensation process being performed.

The present invention provides a computer-executable program for realizing operations, functions and processes of the above-described means. Further, the present invention provides a computer-readable storage medium that holds the computer-executable program.

Embodiments of the invention will now be described, by way of example only, with reference to the accompanying schematic drawings in which corresponding reference symbols indicate corresponding parts, and in which:

Fig. 1 is a block diagram showing the configuration of a digital copier according to an embodiment of the present invention;

Fig. 2 is a block diagram showing the configuration of a scanner compensation unit included in the digital copier;

Fig. 3 is a block diagram showing the configuration of a printer compensation unit included in the digital copier;

Fig. 4 is a block diagram explaining a process for receiving image data, converting the image data by a data format converter included in the digital copier, and holding the image data in the case of transmitting the image data after processing by the data format converter;

Fig, 5 is a block diagram showing the outline configuration of the data format converter included in the digital copier;

Fig. 6 is a block diagram showing the configuration of a halftone processing unit included in the digital copier;

Fig. 7 is a block diagram explaining a process of image formation carried out by an image formation unit included in the digital copier based on the image data that are held;

Fig. 8 is a block diagram showing a configuration example of a conversion unit of the data format converter included in the digital copier;

Fig. 9 is a block diagram showing a configuration example of the conversion unit of the data format converter;

Fig. 10 is a block diagram showing a configuration example of the conversion unit of the data format converter;

Fig. 11 is a block diagram showing a configuration example of the conversion unit of the data format converter;

Fig. 12 is a block diagram showing a configuration example of the conversion unit of the data format converter;

Fig. 13 is a block diagram showing a configuration example of the conversion unit of the data format converter;

Fig. 14 shows block diagrams of a resolution converter included in the digital copier;

Fig. 15 shows geometric shapes for explaining a color space conversion by a color space conversion unit included in the digital copier;
Fig. 16 shows graphs and a table for explaining a filtering process of the present invention;
Fig. 17 shows graphs for explaining a gamma compensation process of the present invention;
Fig. 18 is a flowchart of a process that the digital copier performs;
Fig. 19 is a flowchart of a process that the digital copier performs;
Fig. 20 is a flowchart of a process that the digital copier performs; and
Fig. 21 is a block diagram showing electric connections of:a main controller included in the digital copier.

In the following, embodiments of the present invention are described with reference to the accompanying drawings.

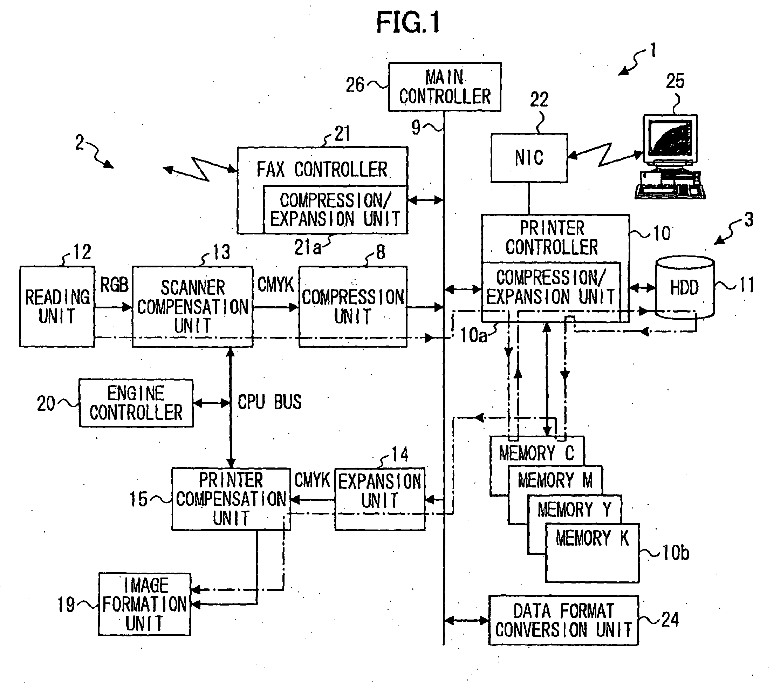

Fig. 1 shows a block diagram of a digital copier 1 according to an embodiment of the present invention. The digital copier 1 is a realization (embodiment) of the image formation apparatus of the present invention, and is a so-called compound apparatus. Below, the outline configuration and process of the digital copier 1 are explained with reference to Fig. 1, the process including steps for reading a manuscript of an original image through steps for printing. In Fig. 1, arrows show flows of image data.

The digital copier 1 includes an engine 2, a printer controller 3, a general-purpose bus 9, and a main controller 26. The engine 2 includes a compression unit 8, a reading unit 12, a scanner compensation unit 13, an expansion unit 14, a printer compensation unit 15, an image formation unit 19, an engine controller 20, a FAX controller 21, and a compression/expansion unit 21a. The printer controller includes a printer controller 10 that further includes a compression/expansion unit 10a, memory unit 10b that includes memory units C, M, Y and K, a hard disk drive (HDD) 11, a network interface controller (NIC) 22, a data format conversion unit 24, and a computer PC 25 that is an external apparatus to the digital copier 1.

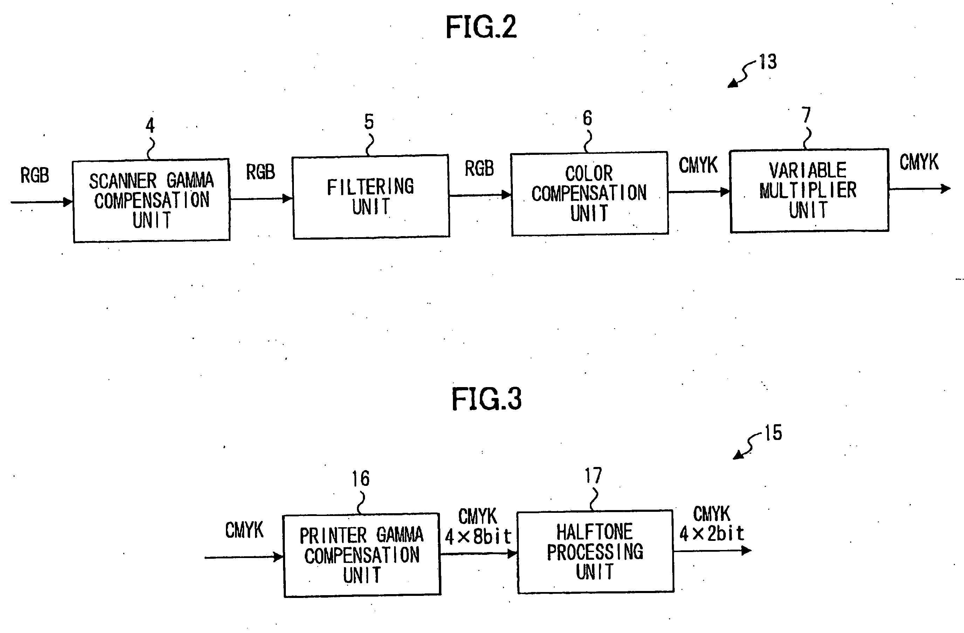

The engine controller 20 is for controlling the entirety of the engine 2, and the reading unit 12 is an image reader for reading an original image to be copied/printed, which image is read as image data with colors being separated into R, G, and B, and the RGB signal is provided to the scanner compensation unit 13. The scanner compensation unit 13 includes, as shown by Fig. 2, a scanner gamma compensation unit 4 for performing a scanner gamma process on the RGB signal, a filtering unit 5 for performing a filtering process on the gamma processed signal, a color compensation unit 6 for converting the filtered signal into color data in the CMYK system, and a variable multiplier unit 7 for performing a multiplication process on the CMYK color data at a variable rate.

The CMYK color data, consisting of 8 bits for each of the colors, that are processed by the scanner compensation unit 13 are provided to the compression unit 8 (refer to Fig. 1), which handles fixed length data, and the 8-bit CMYK color data are compressed into color data of n bits (n<=8) for each of the colors. The compressed data are provided to the printer controller 10 through the general-purpose bus 9.

The semiconductor memory 10b of the printer controller 10 includes memory units that are independently prepared for every color, namely, memories C, M, Y, and K; and the compressed data are held by the semiconductor memory 10b under the control of the main controller 26. Further, the image data are provided to and held by the hard disk 11 at any time as required. This is for dispensing with repeatedly scanning an original image when printing is not normally completed due to jammed paper, and so on, and is for facilitating electronic sorting. Further, recently, digital copiers capable of holding image data so that a desired image can be output as required are available.

When outputting image data to produce an image on a medium, the image data held by the hard disk 11 are loaded into the semiconductor memory 10b of the printer controller 10, and then provided to the engine unit 2 through the general-purpose bus 9. Then, the expansion unit 14 for a fixed length converts the image data into 8-bit image data in the CMYK system. The converted CMYK image data are provided to the printer compensation unit 15.

As shown by Fig. 3, the printer compensation unit 15, serving as image processing means, includes a printer gamma compensation unit 16, and a half tone processing unit 17, and performs a predetermined image processing step. Specifically, in the printer compensation unit 15, the printer gamma compensation unit 16 performs printer gamma compensation on the image data of each color of CMYK. Further, a halftone process corresponding to the image formation unit 19 is performed by the halftone processing unit 17, and an image is formed on a medium, such as paper, by the image formation unit 19 serving as a printer engine (details of the process carried out by the halftone processing unit 17 are described below). As for printing by the image formation unit 19, various methods are available such as an electrophotography method, an ink jet method, a sublimation type heat imprint method, a silver salt photograph method, a direct thermal recording method, and a fusion type thermal imprint method.

As shown by Fig. 1, the FAX controller 21 controls a FAX communication process of the digital copier 1, and image data are provided/received to/from a predetermined network, such as a telephone network. The compression/expansion unit 21a performs expansion and compression of the image data that are received and to be transmitted, respectively. The network interface controller (NIC) 22 is a communication interface for connecting the digital copier 1 to a network, such as a LAN. Details of the data format converter 24 are described below. The main controller 26 includes a microcomputer, and centrally controls the entirety of the digital copier 1.

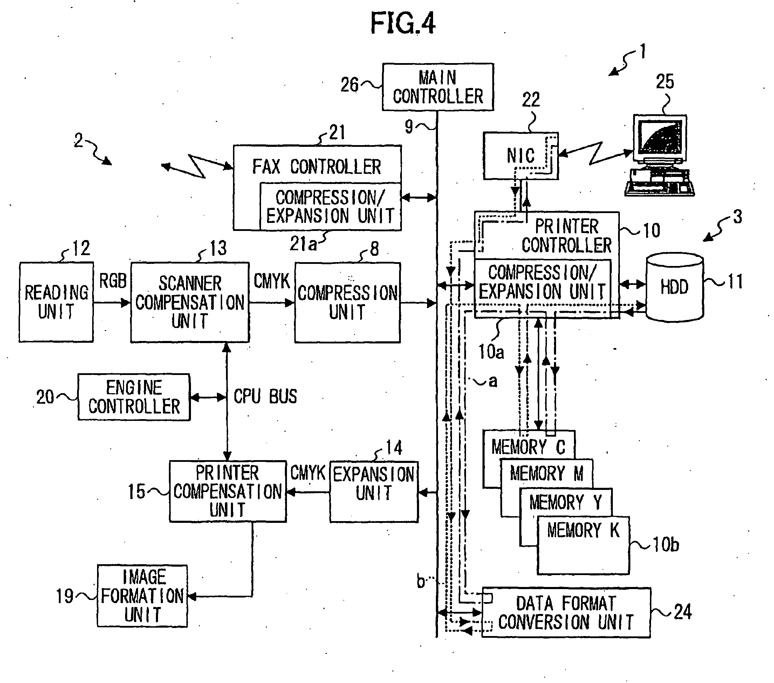

Fig. 4 shows a flow of image data by arrows a. The image data held by the hard disk 11 are loaded in the semiconductor memory 10b of the printer controller 10, and then provided to the data format converter 24 through the general-purpose bus 9. The data format converter 24 performs desired image processing on the image data, and distributes the processed data to the PC 25, and the like through the NIC 22. In this case, the image data distributed to the PC 25, and the like, may be a compressed signal, or the compressed signal after being expanded by the compression/expansion unit 10a, as desired.

Further, when the image data are taken in from the PC 25, and the like, to the digital copier 1 through the NIC 22, the image data flow as indicated by arrows b in Fig. 4. The image data taken in pass through the general-purpose bus 9, and are provided to the data format converter 24 that converts the data format of the image data into a data format used by the digital copier 1. The format-converted data are provided to the hard disk 11 through the general-purpose bus 9, and held by the hard disk 11.

The description so far deals with the case where the image data held by the hard disk 11 are compressed in the color space of the CMYK system. Nevertheless, the image data to be held by the hard disk 11 are image data read as an image to be copied by the digital copier 1, and may be in other color space systems such as a device-dependent color space (such as RGB, Yuv, and CMYK), and a device-independent color space (such as sRGB).

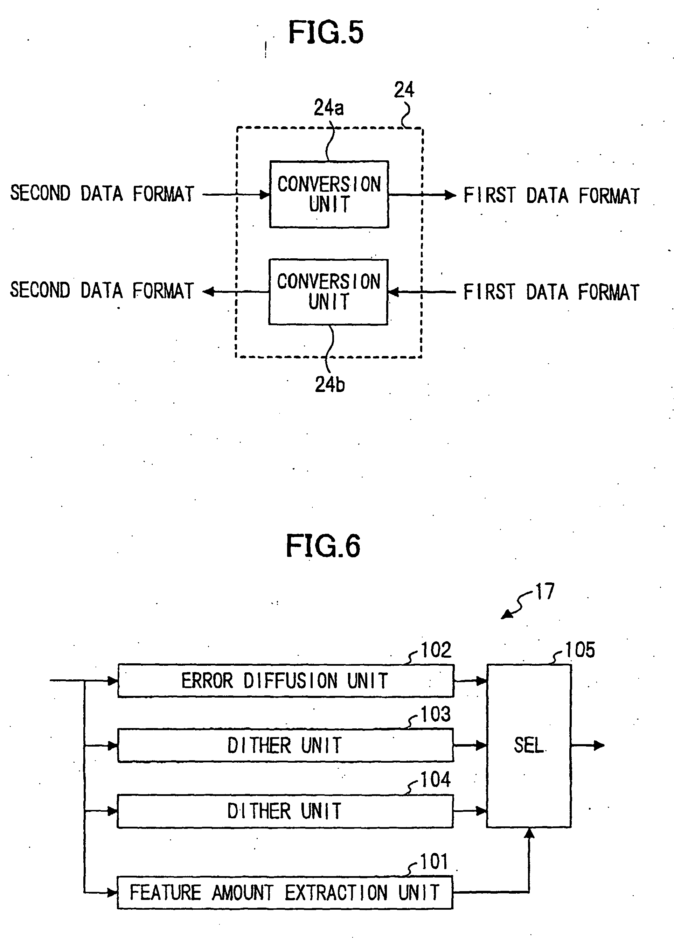

Next, the configuration of the data format converter 24 is explained. As shown by Fig. 5, the data format converter 24 includes a data format conversion unit 24a, and another data format conversion unit 24b. The data format conversion unit 24a changes the image data in a second data format that is the internal data format of the digital copier 1 into image data in a first data format that is often used by the PC 25, and the like. Conversely, the conversion unit 24b changes the image data in the first data format into the image data in the second data format. That is, the conversion unit 24a carries out a reverse operation of the conversion unit 24b, and vice versa.

Next, the halftone processing unit 17 is explained. Fig. 6 is a block diagram explaining an example of the configuration of the halftone processing unit 17.

In reference to Fig. 6, the halftone processing unit 17 includes a feature amount extraction unit 101 for determining whether an image is constituted by characters, patterns, or a mixture thereof; an error diffusion unit 102 for performing an error diffusion process on the image; a dither unit 103 for performing a dither process on the image; another dither unit 104 for performing another dither process on the image, which process is different from what the dither unit 103 performs; and a selection unit 105 for selecting the image data processed by one of the above processes, and for outputting the selected image data.

In the digital copier 1, image formation is performed in one of a character mode, a photograph mode, and a character/photograph mode. That is, when an image is a character image, the character mode is chosen, the error diffusion unit 102 performs an optimal error diffusion process for the character image, and image formation is carried out. When the image is a pattern image, the photograph mode is chosen, the dither unit 103 performs an optimal dither process for the pattern image, and image formation is carried out. Further, when the image contains both characters and patterns, the character/photograph mode is chosen, the dither unit 104 performs an optimal dither process for the character/pattern mixture image, and image formation is carried out. That is, the selection unit 105 selects and outputs the one of the images that is processed by the error diffusion unit 102, the dither unit 103, or the dither unit 104 to the image formation unit 19 according to the determination by the feature amount extraction unit 101.

Further, the printer gamma compensation unit 16 of the printer compensation unit 15 is capable of setting up density (darkness) of an image. For example, nine levels (notches) 1 through 9 of density are available for selection, which is in agreement with the density value set up at the time of copying, where the density level 1 provides the darkest image, and the density level 9 provides the lightest image.

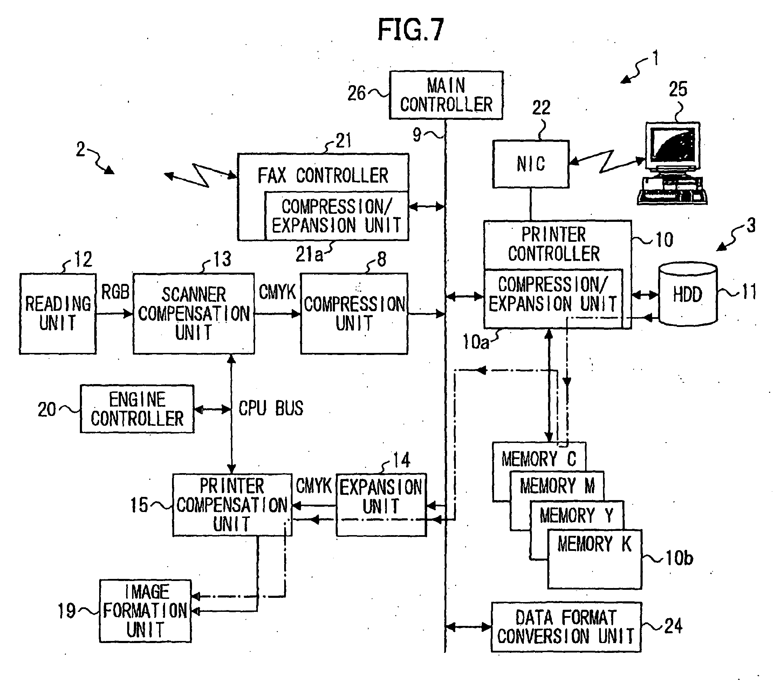

As shown by Fig. 7, when the image formation unit 19 performs image formation of an image held by the hard disk 11, the target image data are loaded into the semiconductor memory 10b, processed by the printer compensation unit 15, and image formation is carried out by the image formation unit 19. Arrows in Fig. 7 show the flow of the image data in this case.

Next, a configuration example of the data format converter 24 is explained.

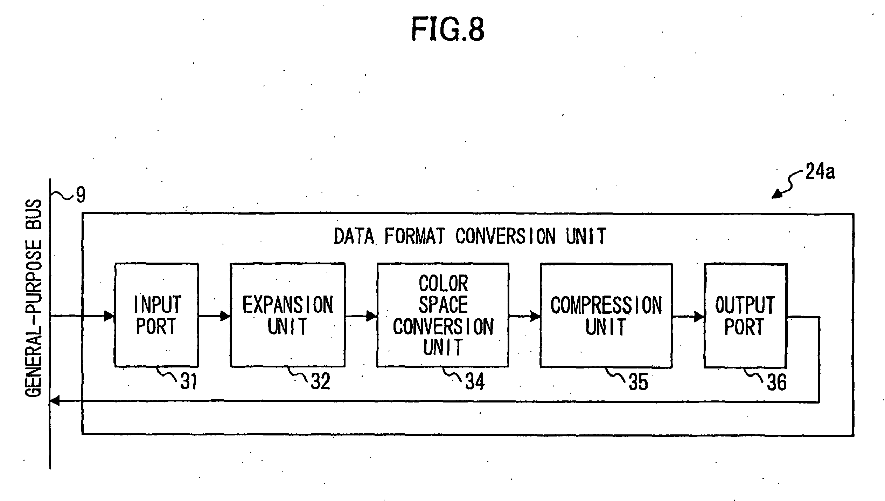

Fig. 8 is a block diagram showing the configuration of the conversion unit 24a of the data format converter 24. As shown by Fig. 8, an input port 31 receives image data held by the hard disk 11 through the general-purpose bus 9. The expansion unit 32 expands the image data that are compressed, and in the second data format, i.e., the data format internal of the digital copier 1. The expanded image data are converted into a predetermined color space by the color space conversion unit 34, and are compressed by the compression unit 35 in a compression coding format predetermined by the image data such that the image data are converted to the first data format that can be easily handled by the PC 25, and the like.

In short, the conversion unit 24a converts image data in the second data format that is the internal data format of the digital copier 1 held by the hard disk 11 into image data in the first data format that is easily handled by the PC 25, and the like.

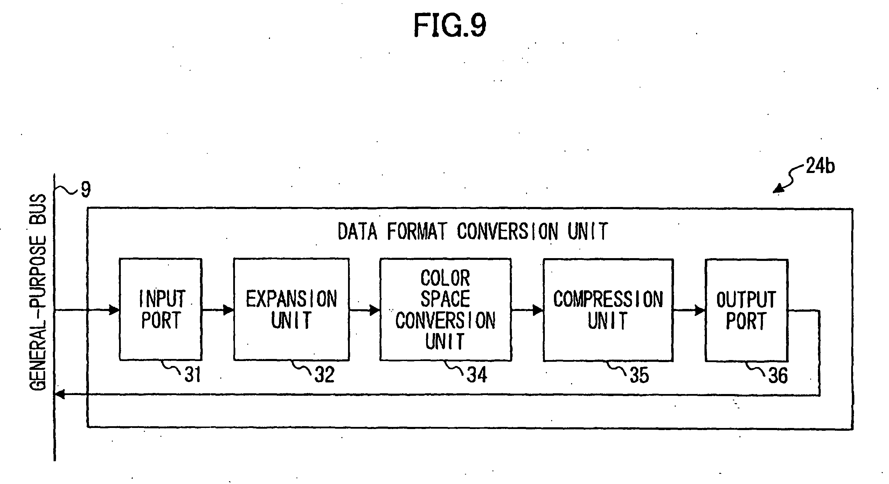

Fig. 9 is a block diagram showing the configuration of the conversion unit 24b of the data format converter 24.

As shown by Fig. 9, the input port 31 receives image data held by the hard disk 11 through the general-purpose bus 9. The expansion unit 32 expands the image data that are compressed, and in the first data format used by the PC 25 and the like. The expanded image data are converted to a predetermined color space by the color space conversion unit 34, and are compressed by the compression unit 35 in a compression coding format predetermined for the image data such that the image data are converted to the second data format that is the internal data format of the digital copier 1.

That is, the conversion unit 24b changes image data in the first data format used by the PC 25, and the like held by the hard disk 11 into image data in the second data format that is the internal data format of the digital copier 1.

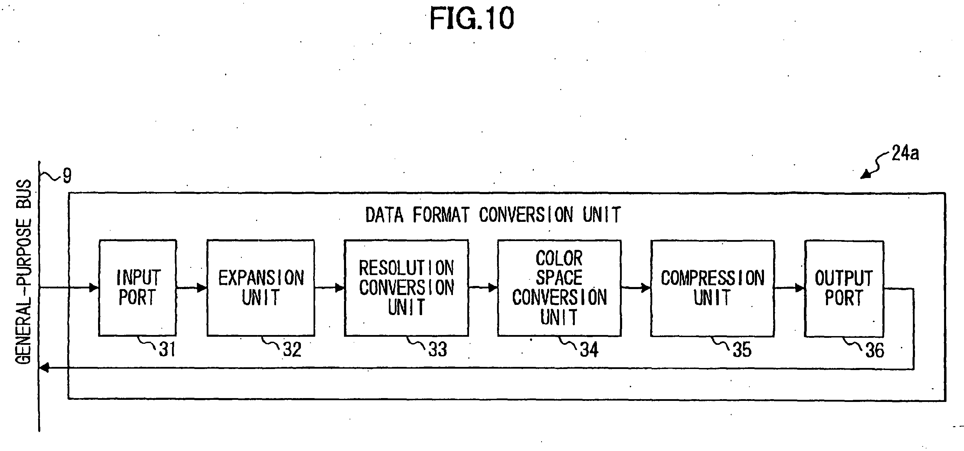

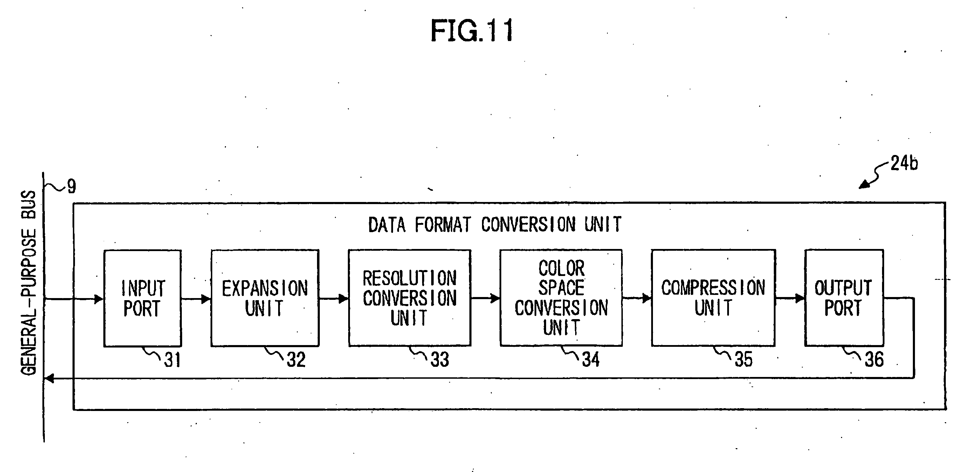

Fig. 10 and Fig. 11 show other configuration examples of the conversion units 24a and 24b, respectively. That is, in the examples shown by Fig. 10 and Fig. 11, a resolution converter 33 for changing the resolution of an image is provided in addition to the configuration examples of Fig. 8 and Fig. 9, respectively. In this manner, a resolution suitable for each of the digital copier 1, the PC 25, and the like is provided.

Next, a configuration example of the data format converter 24 is explained from other aspects.

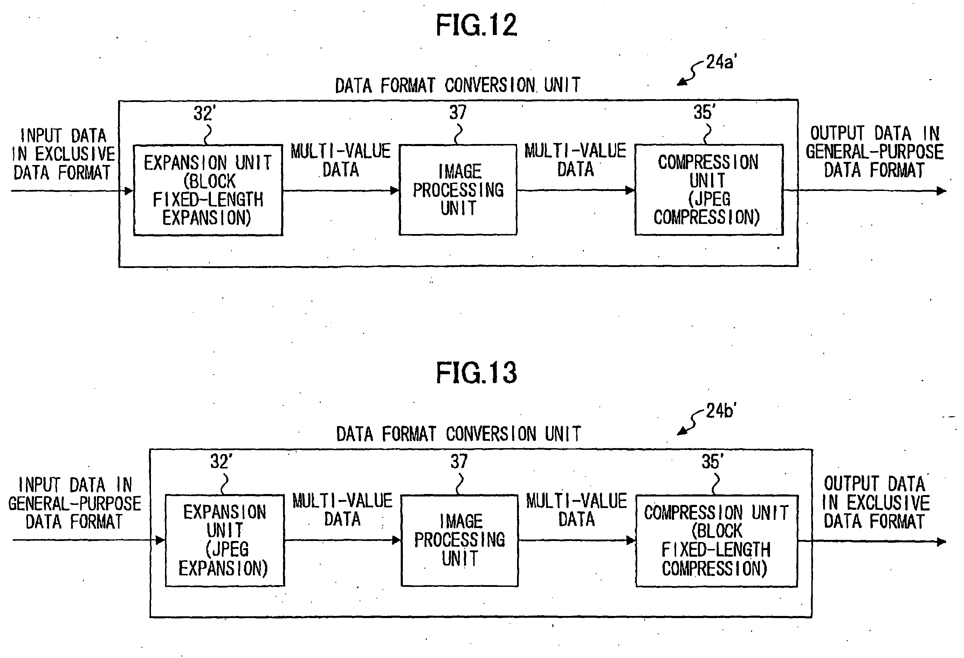

First, the conversion unit 24a shown by Fig. 12 includes an expansion unit 32 that employs a block fixed-length expansion, an image processing unit 37, and a compression unit 35. The conversion unit 24a is applicable to the case wherein data that are compressed by a data format, which is exclusive of the digital copier 1 (the second data format), are input, and output is to be provided in a general-purpose data format, such as JPEG and JPEG 2000, (the first data format). The second data format, which is exclusively used by the digital copier 1, is not a general-purpose data format, such as JPEG and JPEG 2000, which is usually used by the PC, etc. Accordingly, the expansion unit 32 employs a fixed-length block expansion method, which is also exclusively used by the digital copier 1, for expanding the data in the second data format, thereby maintaining compression efficiency and data processing efficiency. The compression method of the compression unit 35 is in compliance with the general-purpose data format, such as JPEG and JPEG 2000. Further, although illustration is omitted, the image processing unit 37 includes the resolution converter 33, the color space conversion unit 34, the input port 31 and the output port 36.

Further, the conversion unit 24b shown by Fig. 13 performs the inverse transformation of the conversion unit 24a.

Here, although the descriptions above are presented about the case where the PC 25, and the like use the first data format, which is a general-purpose data format, and the digital copier 1 uses the second data format, which is an exclusive format, the digital copier 1, the PC 25 and the like may commonly use the general-purpose data format, or the exclusive data format.

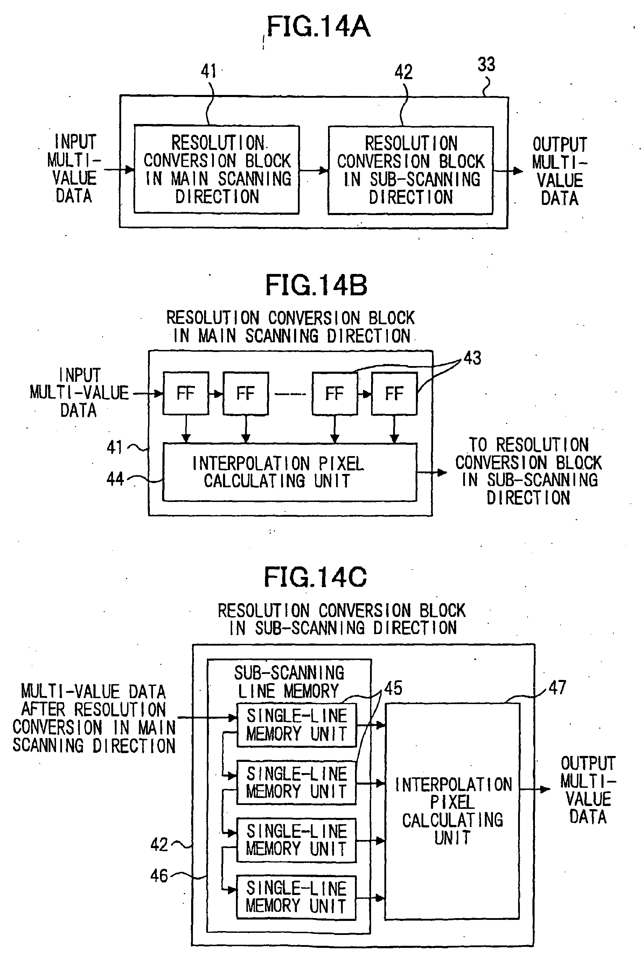

Next, the resolution converter 33 is explained in detail. In this example, target pixel data are multi-value data, and resolution can be converted freely in each of main scanning and sub-scanning directions. As shown at (a) of Fig. 14, the resolution converter 33 includes a resolution conversion block for main scanning direction 41 for carrying out resolution conversion of the input multi-value data in the main scanning direction; and a resolution conversion block for sub-scanning direction 42 for carrying out resolution conversion in the sub-scanning direction of the multi-value data of which resolution is converted in the main scanning direction.

As shown at (b) of Fig. 14, the resolution conversion block for the main scanning direction 41 includes two or more flip-flops 43, each of which is for latching 1 bit of the image data, and an interpolation pixel calculation unit 44 for calculating interpolation values for the data latched by the flip-flops 43. In order that the input multi-value data are converted to a desired resolution, interpolation is performed by the interpolation pixel calculation unit 44, where interpolated values are obtained by a standard calculation method such as a maximum proximity pixel substitution method, a 2-adjacent pixel weighted average method, and a 3-dimensional function convolution method.

As shown at (c) of Fig. 14, the data after resolution conversion in the main scanning direction are processed by the resolution conversion block 42 for-the sub-scanning direction, which includes a sub-scanning line memory 46 that further includes multiple single-line memory units 45, and an interpolation pixel calculation unit 47. There, data values of a line to be interpolated are calculated by the interpolation pixel calculation unit 47 based on data of a reference pixel in the sub-scanning direction from the sub-scanning line memory 46, wherein the single-line memory units 45 hold the data for the multiple lines after the resolution conversion in the main scanning direction. The interpolated values are obtained by a standard calculation method, such as the maximum proximity pixel substitution method, the 2-adjacent pixel weighted average method, and the 3-dimensional function convolution method.

Next, a color space conversion process carried out by the color space conversion unit 34 is explained in detail.

An example of the color space conversion using a table interpolation method is explained.

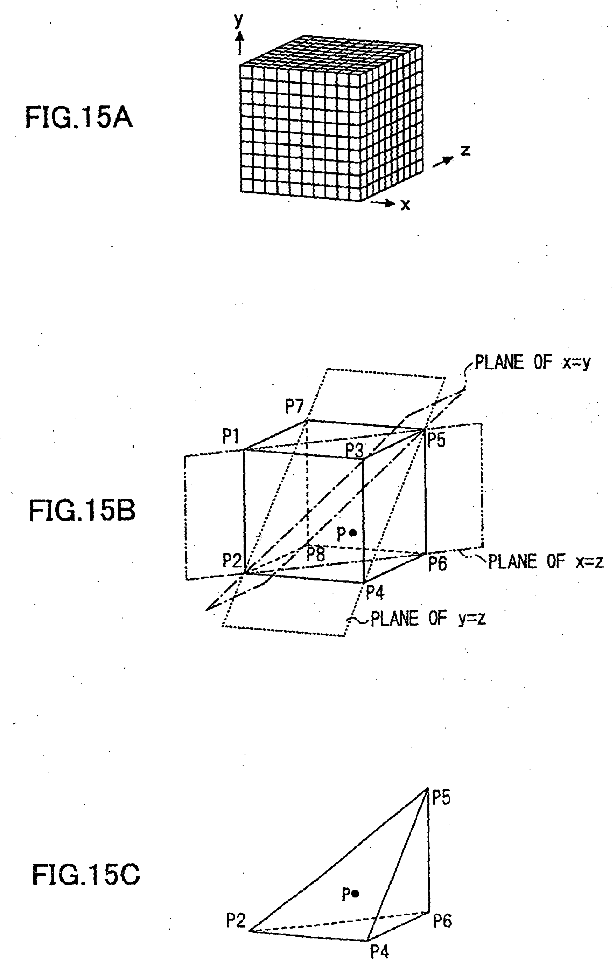

In this process, a predetermined look-up table (LUT) is used. Here, an input color space is expressed in three dimensions of xyz axes, each dimension (axis) being divided into eight blocks as shown at (a) of Fig. 15. The input color space is divided into high order coordinates and low order coordinates. For the high order blocks, the LUT is referred to; and for the low order blocks, a 3-dimensional interpolation is used. In this manner, a precise output is obtained.

Although various 3-dimensional interpolation methods are available, a tetrahedron interpolation method, which is the simplest method in linear interpolation methods, is described below, for example. As shown at (a) of Fig. 15, the tetrahedron interpolation method divides the input color space into two or more unit cubes, and each cube is further divided into six tetrahedrons that share the symmetry axes of the unit cube as shown at (b) of Fig. 15. Then, a unit tetrahedron is selected as shown at (c) of Fig. 15 based on the high-order coordinates of an input chrominance signal, and parameters (lattice point parameters) of the division boundary points (lattice points) of the selected unit tetrahedron are searched for from the LUT. Next, a linear operation is carried out on the lattice point parameters of the unit tetrahedron selected based on the low order coordinates, such that an output value is obtained.

Specifically, the following process is performed.

1. Select a unit cube that contains an input chrominance signal X(x, y, z).
2. Determine low order coordinates (lx, ly, lz) of a point P within the selected unit cube.
3. Select a unit tetrahedron by comparing magnitudes of the low order coordinates, perform linear interpolation for every unit tetrahedron, and calculate an output value $P_{out}$ at the point P. Operations of the linear interpolation of each unit tetrahedron are expressed by the following formulas (here, the character "1" represents the length of a side of the unit cube).

$$(l_x < l_y < l_z)\ P_{out} = P2 + (P5 - P7) \, x l_x / 1 + (P7 - P8) \, x l_y / 1 + (P8 - P2) \, x l_z / 1$$

$$(l_y <= l_x < l_z)\ P_{out} = P2 + (P6 - P8) \, x l_x / 1 + (P5 - P6) \, x l_y / 1 + (P8 - P2) \, x l_z / 1$$

$$(l_y < l_z <= l_x)\ P_{out} = P2 + (P4 - P2) \, x l_x / 1 + (P5 - P6) \, x l_y / 1 + (P6 - P4) \, x l_z / 1$$

$$(l_z <= l_y <= l_x)\ P_{out} = P2 + (P4 - P2) \, x l_x / 1 + (P3 - P4) \, x l_y / 1 + (P5 - P3) \, x l_z / 1$$

$$(l_z <= l_x < l_y)\ P_{out} = P2 + (P3 - P1) \, x l_x / 1 + (P1 - P2) \, x l_y / 1 + (P5 - P3) \, x l_z / 1$$

$$(l_x < l_z <= l_y)\ P_{out} = P2 + (P5 - P7) \, x l_x / 1 + (P1 - P2) \, x l_y / 1 + (P7 - P1) \, x l_z / 1$$

Further, the image processing unit 37 of the conversion units 24a and 24b may be made to perform filtering of the image data, as described below. Filtering is for modulating MTF values of the image data, and two kinds of filtering are available. Namely, one is to raise the MTF values such that an edge of the image is emphasized as compared with the original image data, and the other is to lower the MTF values such that the image is smoothed.

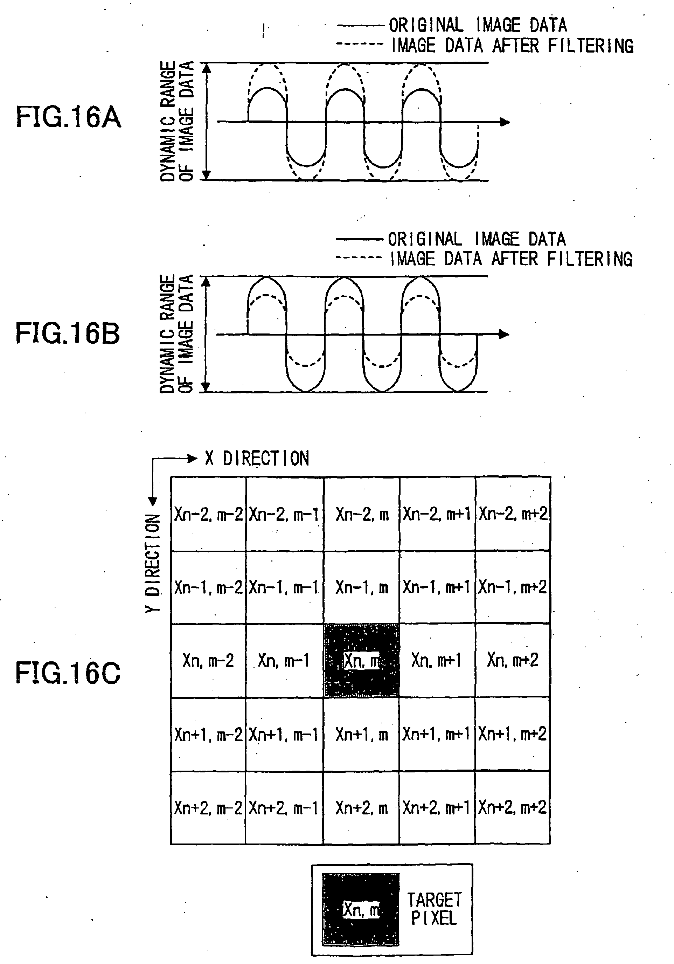

With reference to Fig. 16, when filtering raises the MTF values of the image data, peaks and valleys of the original image frequency (shown by a solid-line curve at (a)) are emphasized as shown by a dashed-line curve. Here, the vertical axis represents the dynamic range of the image density, and the horizontal axis represents "raster form reference" of the image data.

Conversely, when the filtering lowers the MTF values of the image data, the peaks and the valleys of the original image frequency (solid-line curve) are suppressed as indicated by a dashed-line curve shown at (b) of Fig. 16. In the actual process, the image data are treated line by line, where the directions of the raster form of the 2-dimensional image data are made into the directions of the line (x directions), and the other directions are made into the directions of y; and a target pixel value is computed based on surrounding pixel values.

At (c) of Fig. 16, twenty-five (5x5) pixels are symbolically shown with the target pixel at the center being identified as $X_{n,m}$, and surrounded by other pixels.

When raising the MTF values of the image data, coefficients (matrix coefficients) constituted by differential coefficients of the image frequency that needs to be emphasized are calculated by making resolution of the image data be the key, the coefficients being arranged in the shape of a matrix. Here, the matrix coefficients are expressed by $A_{m-2,n-2}$, $A_{m-2,n-1}$, ---, $A_{m,n}$, $A_{m+2,n+1}$, and through $A_{m+2,n+2}$. Then, the pixel value Y of the target pixel after filtering for raising the MTF values of the image data is obtained by the following formulas.

$$B = (X_{m-2,n-2} \times A_{m-2,n-2}) + (X_{m-2,n-1} \times A_{m-2,n-1}) + -- + (X_{m+2,n+2} \times A_{m+2,n+2}) \quad -- \quad (1)$$

$$D = B \times C \quad -- \quad (2)$$

$$Y = D + X_{n,m} \quad -- \quad (3)$$

The formula (1) calculates a matrix product for the matrix coefficients obtained by the differential coefficients, and the image data. The value B obtained by the formula (1) serves as the image emphasis component in the filtering process. Further, the formula (2) is for adjusting (increasing or decreasing) the degree of the image emphasis value D, the value C being a desired constant. The image emphasis value D obtained according to the formula (2) is added to the target pixel value (the formula (3)) such that the pixel value Y of the target pixel after filtering is obtained. In this manner, all the pixels of the image data are converted, and the MTF values of the image data are raised.

When smoothing the image data, an average of pixel values of the target pixel and its circumferential pixels is calculated by adding the pixel values of the target pixel and its circumferential pixels, and dividing the sum thereof by the number E of the pixels. In this manner, all the pixels of the image data are converted such that the image data are smoothed. It is also possible to adjust the degree of smoothing by assigning different weights to the target pixel and the circumferential pixels. In this case, the value Y of the target pixel is adjusted by substituting desired integers into the matrix coefficients of the following formula (4).

$$Y = \{ (X_{m-2,n-2} \times A_{m-2,n-2}) + (X_{m-2,n-1} \times A_{m-2,n-1}) + -- + (X_{m+2,n+2} \times A_{m+2,n+2}) \} / E \quad -- \quad (4)$$

The process as described above realizes the filtering for modulating the MTF of the image data of multiple values. Accordingly, if the original image is based on characters, the quality of the image is improved by emphasizing the MTF. If the original image is based on patterns, the quality of the image is improved by giving smoothness to a certain extent. Thus, a high-quality image can be obtained by selecting filtering factors according to the kind of original image.

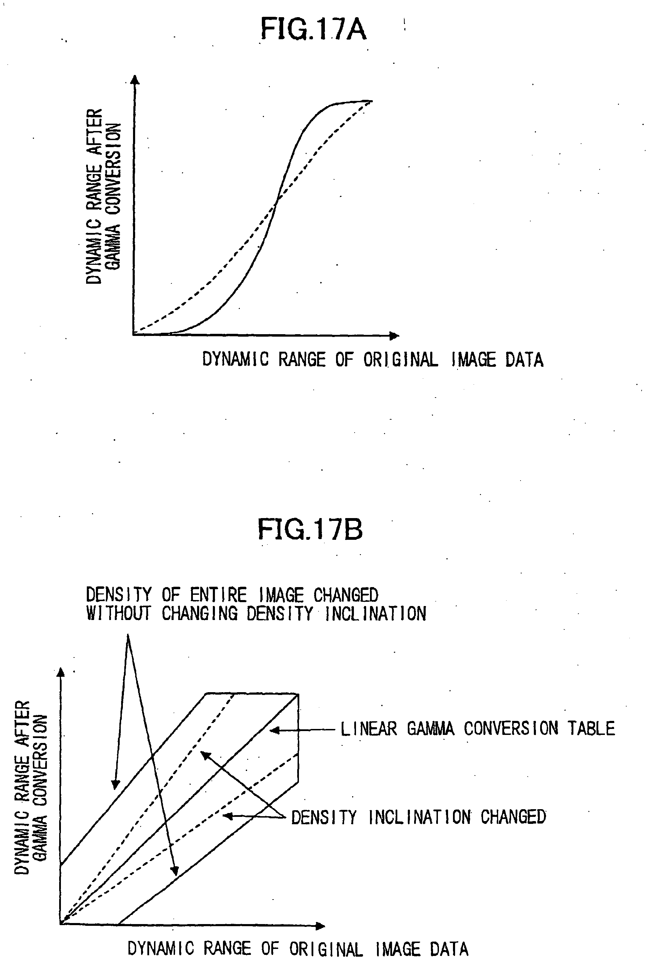

Further, the image processing unit 37 of the conversion units 24a and 24b may be made to perform a gamma compensation process, which is explained in the following. The gamma compensation process is for adjusting the image density slope, and the image density property of an image. At (a) of Fig. 17, a curve in the solid line represents characteristics of a first gamma compensation table, and according to the curve, a value of original image data (horizontal axis) is converted to a value of the image data after gamma compensation (vertical axis). Image data having a desired image density distribution are obtained by changing the curve of the gamma compensation table. For example, a curve in the dashed line at (a) of Fig. 17 represents characteristics of a second gamma compensation table, where an image density slope that is smoother than the image density slope obtained by the first gamma compensation table is obtained. Here, the image density becomes high as it is on the arrow side of the graph (i.e., to the right and to the top).

Methods of preparing various gamma compensation tables are explained with reference to a linear gamma compensation table (solid line) that is extended in the direction of 45 degrees from the point of origin as shown at (b) of Fig. 17.

When changing the whole image density without changing the image density property, the linear gamma compensation table is moved parallel to the horizontal axis as shown at (b) of Fig. 17. When changing the density inclination, inclination of the gamma compensation table is changed as shown by dashed lines at (b) of Fig. 17. Further, when changing the image density property as desired, a gamma compensation table represented by a curve, such as shown at (a) of Fig 17, is used.

In this manner, the gamma compensation process that is capable of changing the image density slope, and capable of changing the image density property is realized for the image data having multiple values; and a high-quality image is produced by selecting a gamma curve according to the kind of image.

Next, a series of processes performed between the digital copier 1 and the PC 25 are explained.

Driver software for operating the digital copier 1 is installed in the PC 25, which software is capable of providing an image capture request signal to the digital copier 1.

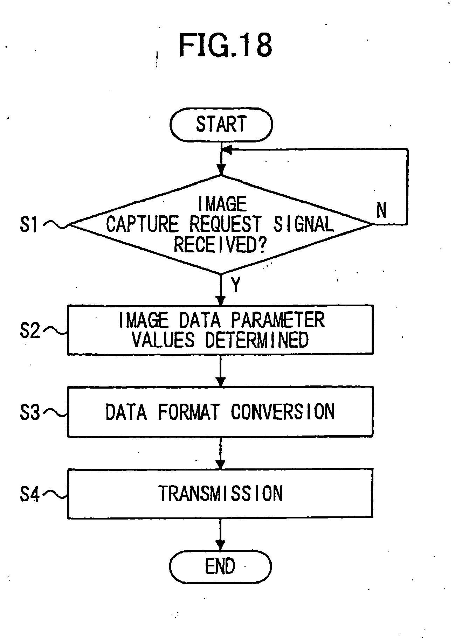

As described above, image data are held by the hard disk 11, which is also referred to as the second storage means, and the second storage function. As shown by Fig. 18, the main controller 26 receives an image capture request signal from the PC 25 (the second receiving means, and the second receiving function) (Y at Step S1); and determines image data parameter values to be set up to the data format converter 24 (Step 52) based on the attribute of the image, information about the attribute being included in the image capture request signal received from the PC 25, and the attribute of the image data held by the hard disk 11, capturing of the image data being requested. Then, according to the image data parameter values, the data format conversion process as described above is carried out by the data format converter 24 on the image data held by the hard disk 11. That is, the data format (the second data format) of the image data held by the hard disk 11 is converted to another data format, i.e., the first data format (the second data format conversion means, and the second data format conversion function) (Step S3), and the image data that are converted in this manner are transmitted to the PC 25 (the transmitting means, and the transmitting function) (Step S4).

In this manner, if the PC 25 requests, for example, color multi-value image data compressed by the JPEG method at a resolution of 600 dpi and in the color space of sRGB, and if, for example, the image data held by the hard disk 11 are at a resolution of 600 dpi, in the color space of YMCK, and not compressed, the data format converter 24 converts the image data held by the hard disk 11 as required by the PC 25, and provides the converted image data to the PC 25.

Further, the PC 25 is capable of transmitting image data to the digital copier 1, and requesting the digital copier 1 to receive (take in) the image data.

When transmitting the image data to the digital copier 1, a menu screen for selecting the kind of image process to be performed is displayed on the display of the PC 25 by the driver software. In this example, image modes (such as the character mode, character/photograph mode, and photograph mode), and image density (density levels 1 through 9) are selectable.

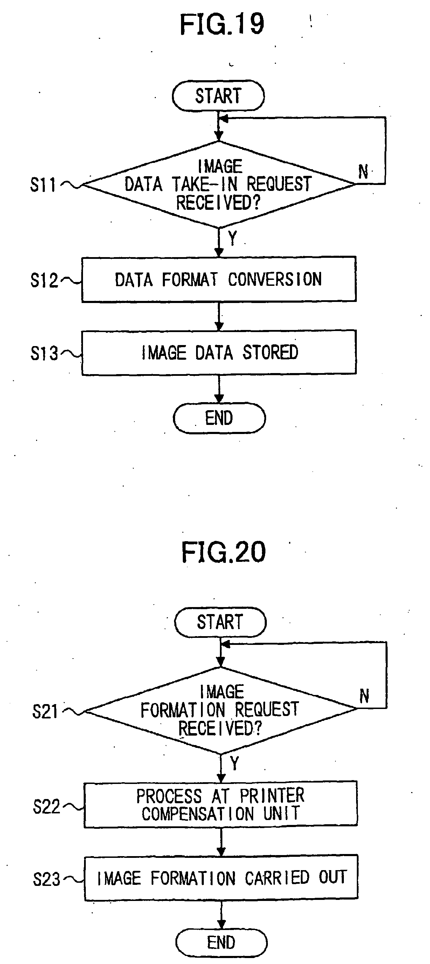

As shown by Fig. 19, the main controller 26 controls such that when the digital copier 1 receives the request for taking in the image data (the first receiving means, and the first receiving function) from the PC 25 that has selected the kind of image process, that is Y at Step S11, the received image data in the first data format are converted into image data in the second data format by the data format converter 24 (the first data format conversion means, and the first data format conversion function) (Step S12). Then, the converted image data are provided to the hard disk 11 such that the image data are held by the hard disk 11 (the first storage means, and the first storage function) with the information about the kind of image process specified by the PC 25 (Step S13).

As shown by Fig. 20, when the main controller 26 receives a request for executing image formation of specific image data held by the hard disk 11 from the PC 25 (Y at Step S21), the image data are processed by the printer compensation unit 15 (Step S22) (the image processing means, and the image processing process). Here, Step S22 especially includes processes whereby the halftone processing unit 17 of the printer compensation unit 15 carries out the halftone process in one of the character mode, the character/photograph mode, and the photograph mode, according to the kind of image process; and the image density setup process according to the specified image density. Then, the image formation unit 19 carries out image formation (Step S23) (the image formation means, and the image formation function).

A specific example of the process at Step S22 is described as follows. If the selected image processing mode is the character mode, and the selected image density notch (level) is 5, the printer gamma compensation unit 16 prepares a gamma table for the image density notch 5, and an error diffusion process for the character mode is performed on the whole image.

If the selected image processing mode is the character/photograph mode, the dither unit 104 is used; and if the selected image processing mode is the photograph mode, the dither unit 103 is used. In this manner, the halftone process corresponding to the kind of image data is selected.

Further, if the halftone process is arranged such that the mode (consequently, error diffusion or dither) is selected according to the amounts of the image features, such as the amount of edges of an image, improvements in quality of the image are further possible,

In this manner, image data from the PC 25 are taken in to the hard disk 11 of the digital copier 1, and the image is printed by the same path as used when copying. In the digital copier 1, since hardware realizes the copying process, high speed and high definition printing is available. In order that the digital copier 1 provides real-time copying operations, the data converter 24, and the printer compensation unit 15 are realized by hardware. Otherwise, i.e., if they are realized by software, more time is required for processing. By realizing these functions by hardware, printing can be performed at a higher speed compared with conventional printers.

Further, since the printer compensation unit 15 performs the halftone process for copying, compatibility of characters and patterns is realized at a high level, providing high definition print compared with the image produced by conventional printers.

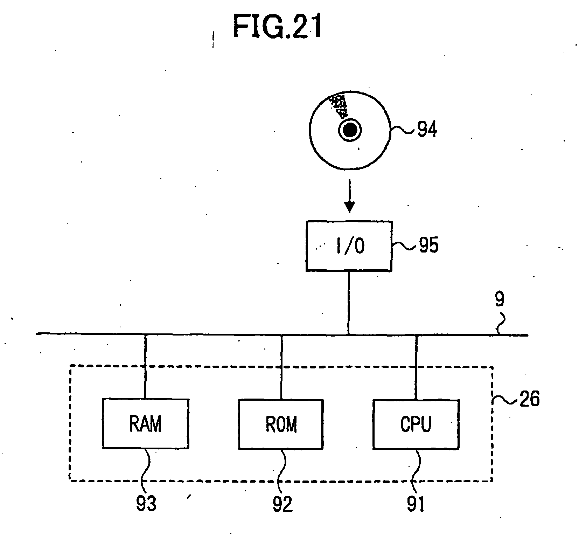

Fig. 21 is a block diagram showing electric connections around the main controller 26. The main controller 26 includes a CPU 91 that performs various operations, and centrally controls each part of the digital copier 1, which CPU 91 is connected to a ROM 92 and a RAM 93 through the general-purpose bus 9. The ROM 92 serving as a memory medium holds the control program described above with reference to Figs. 18-20. (The ROM 92 may be also equipped with a non-volatile memory, such as a flash memory. In this case, the control program may be held by a storage medium 94, such as an optical disk, read by a predetermined apparatus, such as an optical disk apparatus, and loaded into the non-volatile memory through an I/O Port 95, such that the control program is executed.

[Effect of the Invention]

As described above, the present invention provides the image formation apparatus, the computer-executable program for realizing the image formation apparatus, and the computer-readable storage medium holding the computer-executable program that enable, among other things, producing the same image quality for image data whether the image data are held inside the image information apparatus or are provided from an external source, to communicate the image data between the image formation apparatus, an external PC, and the like in a desired data format, in a desired color space, at a desired resolution, and so on.

Further, the present invention is not limited to these embodiments, but various variations and modifications may be made without departing from the scope of the present invention.

**Claims**

1. An image formation apparatus (1) equipped with a printer engine for forming an image on a medium, and a communication interface for communicating with an external device, comprising:

   image processing means (15) for performing a predetermined image process on image data to be used for image formation;
   image formation means (19) for forming the image by the printer engine based on the image data that are processed by the image processing means;
   first receiving means (21) for receiving the image data and, the image data being provided from the external device through the communication interface;
   first storage means (11) for holding the image data and the information as to what kind of image processing is to be performed that are received by the first receiving means; and
   **characterised in that** the first receiving means is further for receiving information as to what kind of image processing is to be performed on the image data, the information being provided from the external device through the communication interface; and by
   first data format conversion means (24) for converting a first data format that is the data format of the image data into a second data format prior to the predetermined image process being carried out;
   wherein the image processing means performs the predetermined image process according to the information as to what kind of image process is to be performed, the information being received by the first receiving means.

2. The image formation apparatus as claimed in claim 1, further comprising:

   an image reader (12) for reading an image manuscript as the image data; and
   second storage means for holding the image data in the second data format.

**3.** The image formation apparatus as claimed in claim 2, wherein the image processing means (15) performs the predetermined image process according to kinds of the image data that are read by the image reader and held in the second data format.

**4.** The image formation apparatus according to any one of the preceding claims, further comprising:

second storage means for holding the image data in the second data format;
second receiving means for receiving a request for transmission of the image data to a predetermined destination;
second data format conversion means (24) for converting the data format of the image data held by the second storage means from the second data format to the first data format; and
transmitting means for transmitting the converted image data to the predetermined destination.

**5.** The image formation apparatus according to any one of the preceding claims, wherein the image processing means (15) performs a halftone process.

**6.** The image formation apparatus according to any one of the preceding claims, wherein the image processing means (15) performs an image density setting process for adjusting darkness/brightness of the image.

**7.** The image formation apparatus according to any one of the preceding claims, further comprising:

second data format conversion means (24) for converting the data format of the image data from the second data format to the first data format.

**8.** The image formation apparatus as claimed in claim 7, wherein a general-purpose data format serves as the first data format and the second data format.

**9.** The image formation apparatus according to either claim 7 or claim 8, wherein a data format peculiar to the image formation apparatus serves as the second data format, and a general-purpose data format serves as the first data format.

**10.** The image formation apparatus according to any one of claims 7 to 9, wherein the data format peculiar to the information apparatus serves as the first data format and the second data format.

**11.** The image formation apparatus according to any one of the preceding claims, wherein color space of the image data in the first data format used by the first data format conversion means is different from the color space of the image data in the second data format.

**12.** The image formation apparatus according to any one of the preceding claims, wherein resolution of the image data in the first data format used by the first data format conversion means is different from the resolution of the image data in the second data format.

**13.** The image formation apparatus according to any one of claims 7 to 12, wherein the first data format conversion means (24) and the second data format conversion means (24) perform a spatial filtering process to one of the image data in the first data format and the image data in the second data format.

**14.** The image formation apparatus according to any one of claims 7 to 13, wherein the first data format conversion means (24) and the second data format conversion means (24) perform a gamma compensation process to one of the image data in the first data format and the image data in the second data format.

**15.** An image forming method for controlling an image formation apparatus (1) equipped with a printer engine for forming an image on a medium, and a communication interface for communicating with an external device, comprising:

an image processing step for performing a predetermined image process on image data to be used for image formation;
an image formation step for forming the image by the printer engine based on the image data that are processed in the image processing step;,
a first receiving step for receiving the image data, the image data being provided from the external device through the communication interface;

a first storage step for holding the image data and the information as to what kind of image processing is to be performed that are received by the first receiving step; and

**characterised in that** the first receiving step is further for receiving information as to what kind of image processing is to be performed on the image data, the information being provided from the external device through the communication interface; and by

a first data format conversion step for converting a first data format that is the data format of the image data into a second data format prior to the predetermined image process;

wherein the image processing step performs the predetermined image process according to the information as to what kind of image process is to be performed, the information being received in the first receiving step.

16. An image forming method according to claim 15

for controlling the image formation apparatus that is further equipped with an image reader for reading an image manuscript as the image data, further comprising:

a second storage step for holding the image data in the second data format.

17. An image forming method according to either claim 15 or claim 16, wherein the image processing step performs the predetermined image process according to kinds of the image data that are read by the image reader and held in the second data format.

18. An image forming method according to any one of claims 15 to 17, further comprising

a second storage step for holding the image data in the second data format;

a second receiving step for receiving a request for transmission of the image data to a predetermined destination;

a second data format conversion step for converting the data format of the image data held in the second storage step from the second data format to the first data format; and

a transmitting step for transmitting the converted image data to the predetermined destination.

19. An image forming method according to any one of claims 15 to 18, wherein the image processing step performs a halftone process.

20. An image forming method according to any one of claims 15 to 19, wherein the image processing step performs an image density setting process for adjusting darkness/brightness of the image.

21. A computer comprising program code means that, when executed on a computer system instructs an image forming apparatus equipped with a printer engine for forming an image on a medium, and a communication interface for communication with an external device to carry out the steps according to any one of claims 15 to 20.

22. A computer readable storage medium having recorded thereon program code means that, when executed on a computer system instructs the image forming apparatus equipped with a printer engine for forming an image on a medium, and a communication interface for communicating with an external device to carry out the steps according to any one of claims 15 to 20.

**Patentansprüche**

1. Bilderzeugungsvorrichtung (1), die mit einem Druckwerk zum Erzeugen eines Bildes auf einem Medium und einer Kommunikationsschnittstelle zum Kommunizieren mit einer externen Vorrichtung ausgestattet ist, die umfasst:

ein Bildverarbeitungsmittel (15) zum Ausführen eines vorbestimmten Bildprozesses an Bilddaten, die zur Bilderzeugung verwendet werden sollen;

ein Bilderzeugungsmittel (19) zum Erzeugen des Bildes durch das Druckwerk auf der Basis der Bilddaten, die durch das Bildverarbeitungsmittel verarbeitet werden;

ein erstes Empfangsmittel (21) zum Empfangen der Bilddaten, wobei die Bilddaten von der externen Vorrichtung über die Kommunikationsschnittstelle geliefert werden;

ein erstes Speichermittel (11) zum Halten der Bilddaten und der Informationen darüber, welche Art von Bildverarbeitung ausgeführt werden soll, die durch das erste Empfangsmittel empfangen werden; und

**dadurch gekennzeichnet, dass** das erste Empfangsmittel ferner zum Empfangen von Informationen darüber, welche Art von Bildverarbeitung an den Bilddaten ausgeführt werden soll, dient, wobei die Informationen von der externen Vorrichtung über die Kommunikationsschnittstelle geliefert werden; und durch
ein erstes Datenformat-Umsetzungsmittel (24) zum Umsetzen eines ersten Datenformats, das das Datenformat der Bilddaten ist, in ein zweites Datenformat, bevor der vorbestimmte Bildprozess ausgeführt wird; wobei das Bildverarbeitungsmittel den vorbestimmten Bildprozess gemäß den Informationen darüber, welche Art von Bildprozess ausgeführt werden soll, ausführt, wobei die Informationen durch das erste Empfangsmittel empfangen werden.

2. Bilderzeugungsvorrichtung nach Anspruch 1, die ferner umfasst:

einen Bildleser (12) zum Lesen einer Bilddruckvorlage als Bilddaten; und
ein zweites Speichermittel zum Halten der Bilddaten im zweiten Datenformat.

3. Bilderzeugungsvorrichtung nach Anspruch 2, wobei das Bildverarbeitungsmittel (15) den vorbestimmten Bildprozess gemäß Arten der Bilddaten, die vom Bildleser gelesen werden und im zweiten Datenformat gehalten werden, ausführt.

4. Bilderzeugungsvorrichtung nach einem der vorangehenden Ansprüche, die ferner umfasst:

ein zweites Speichermittel zum Halten der Bilddaten im zweiten Datenformat;
ein zweites Empfangsmittel zum Empfangen einer Anforderung für die Übertragung der Bilddaten zu einem vorbestimmten Ziel;
ein zweites Datenformat-Umsetzungsmittel (24) zum Umsetzen des Datenformats der vom zweiten Speichermittel gehaltenen Bilddaten vom zweiten Datenformat in das erste Datenformat; und
ein Übertragungsmittel zum Übertragen der umgesetzten Bilddaten zum vorbestimmten Ziel.

5. Bilderzeugungsvorrichtung nach einem der vorangehenden Ansprüche, wobei das Bildverarbeitungsmittel (15) einen Halbtonprozess ausführt.

6. Bilderzeugungsvorrichtung nach einem der vorangehenden Ansprüche, wobei das Bildverarbeitungsmittel (15) einen Bilddichte-Einstellprozess zum Einstellen der Dunkelheit/Helligkeit des Bildes ausführt.

7. Bilderzeugungsvorrichtung nach einem der vorangehenden Ansprüche, die ferner umfasst:

ein zweites Datenformat-Umsetzungsmittel (24) zum Umsetzen des Datenformats der Bilddaten vom zweiten Datenformat in das erste Datenformat.

8. Bilderzeugungsvorrichtung nach Anspruch 7, wobei ein Universaldatenformat als erstes Datenformat und als zweites Datenformat dient.

9. Bilderzeugungsvorrichtung nach entweder Anspruch 7 oder Anspruch 8, wobei ein der Bilderzeugungsvorrichtung eigentümliches Datenformat als zweites Datenformat dient und ein Universaldatenformat als erstes Datenformat dient.

10. Bilderzeugungsvorrichtung nach einem der Ansprüche 7 bis 9, wobei das der Informationsvorrichtung eigentümliche Datenformat als erstes Datenformat und als zweites Datenformat dient.

11. Bilderzeugungsvorrichtung nach einem der vorangehenden Ansprüche, wobei der Farbraum der Bilddaten im ersten Datenformat, das vom ersten Datenformat-Umsetzungsmittel verwendet wird, vom Farbraum der Bilddaten im zweiten Datenformat verschieden ist.

12. Bilderzeugungsvorrichtung nach einem der vorangehenden Ansprüche, wobei die Auflösung der Bilddaten im ersten Datenformat, das vom ersten Datenformat-Umsetzungsmittel verwendet wird, von der Auflösung der Bilddaten im zweiten Datenformat verschieden ist.

13. Bilderzeugungsvorrichtung nach einem der Ansprüche 7 bis 12, wobei das erste Datenformat-Umsetzungsmittel (24) und das zweite Datenformat-Umsetzungsmittel (24) einen räumlichen Filterprozess entweder an den Bilddaten im ersten Datenformat oder an den Bilddaten im zweiten Datenformat ausführen.

**14.** Bilderzeugungsvorrichtung nach einem der Ansprüche 7 bis 13, wobei das erste Datenformat-Umsetzungsmittel (24) und das zweite Datenformat-Umsetzungsmittel (24) einen Gammakompensationsprozess entweder an den Bilddaten im ersten Datenformat oder an den Bilddaten im zweiten Datenformat ausführen.

**15.** Bilderzeugungsverfahren zum Steuern einer Bilderzeugungsvorrichtung (1), die mit einem Druckwerk zum Erzeugen eines Bildes auf einem Medium und einer Kommunikationsschnittstelle zum Kommunizieren mit einer externen Vorrichtung ausgestattet ist, das umfasst:

einen Bildverarbeitungsschritt zum Ausführen eines vorbestimmten Bildprozesses an Bilddaten, die zur Bilderzeugung verwendet werden sollen;
einen Bilderzeugungsschritt zum Erzeugen des Bildes durch das Druckwerk auf der Basis der Bilddaten, die im Bildverarbeitungsschritt verarbeitet werden;
einen ersten Empfangsschritt zum Empfangen der Bilddaten, wobei die Bilddaten von der externen Vorrichtung über die Kommunikationsschnittstelle geliefert werden;
einen ersten Speicherschritt zum Halten der Bilddaten und der Informationen darüber, welche Art von Bildverarbeitung ausgeführt werden soll, die durch den ersten Empfangsschritt empfangen werden; und
**dadurch gekennzeichnet, dass** der erste Empfangsschritt ferner zum Empfangen von Informationen darüber, welche Art von Bildverarbeitung an den Bilddaten ausgeführt werden soll, dient, wobei die Informationen von der externen Vorrichtung über die Kommunikationsschnittstelle geliefert werden; und durch
einen ersten Datenformat-Umsetzungsschritt zum Umsetzen eines ersten Datenformats, das das Datenformat der Bilddaten ist, in ein zweites Datenformat vor dem vorbestimmten Bildprozess;
wobei der Bildverarbeitungsschritt den vorbestimmten Bildprozess gemäß den Informationen darüber, welche Art von Bildprozess ausgeführt werden soll, ausführt, wobei die Informationen im ersten Empfangsschritt empfangen werden.

**16.** Bilderzeugungsverfahren nach Anspruch 15 zum Steuern der Bilderzeugungsvorrichtung, die ferner mit einem Bildleser zum Lesen einer Bilddruckvorlage als Bilddaten ausgestattet ist, das ferner umfasst:

einen zweiten Speicherschritt zum Halten der Bilddaten im zweiten Datenformat.

**17.** Bilderzeugungsverfahren entweder nach Anspruch 15 oder nach Anspruch 16, wobei der Bildverarbeitungsschritt den vorbestimmten Bildprozess gemäß den Arten der Bilddaten, die vom Bildleser gelesen werden und im zweiten Datenformat gehalten werden, ausführt.

**18.** Bilderzeugungsverfahren nach einem der Ansprüche 15 bis 17, das ferner umfasst
einen zweiten Speicherschritt zum Halten der Bilddaten im zweiten Datenformat;
einen zweiten Empfangsschritt zum Empfangen einer Anforderung für die Übertragung der Bilddaten zu einem vorbestimmten Ziel;
einen zweiten Datenformat-Umsetzungsschritt zum Umsetzen des Datenformats der im zweiten Speicherschritt gehaltenen Bilddaten vom zweiten Datenformat in das erste Datenformat; und
einen Übertragungsschritt zum Übertragen der umgesetzten Bilddaten zum vorbestimmten Ziel.

**19.** Bilderzeugungsverfahren nach einem der Ansprüche 15 bis 18, wobei der Bildverarbeitungsschritt einen Halbtonprozess ausführt.

**20.** Bilderzeugungsverfahren nach einem der Ansprüche 15 bis 19, wobei der Bildverarbeitungsschritt einen Bilddichte-Einstellprozess zum Einstellen der Dunkelheit/Helligkeit des Bildes ausführt.

**21.** Computer mit einem Programmcodemittel, das, wenn es auf einem Computersystem ausgeführt wird, eine Bilderzeugungsvorrichtung, die mit einem Druckwerk zum Erzeugen eines Bildes auf einem Medium und einer Kommunikationsschnittstelle zur Kommunikation mit einer externen Vorrichtung ausgestattet ist, anweist, die Schritte nach einem der Ansprüche 15 bis 20 auszuführen.

**22.** Computerlesbares Speichermedium, auf dem ein Programmcodemittel aufgezeichnet ist, das, wenn es auf einem Computersystem ausgeführt wird, die Bilderzeugungsvorrichtung, die mit einem Druckwerk zum Erzeugen eines Bildes auf einem Medium und einer Kommunikationsschnittstelle zum Kommunizieren mit einer externen Vorrichtung ausgestattet ist, anweist, die Schritte nach einem der Ansprüche 15 bis 20 auszuführen.

**Revendications**

1. Appareil de formation d'image (1) équipé d'un moteur d'imprimante pour former une image sur un support, est d'une interface de communication, pour communiquer avec un dispositif externe, comprenant :

   un moyen de traitement d'image (15) pour effectuer un traitement d'image prédéterminé sur des données d'image devant être utilisées pour la formation d'image ;
   un moyen de formation d'image (19) pour former l'image par le moteur d'imprimante sur la base des données d'image qui sont traitées par le moyen de traitement d'image ;
   un premier moyen de réception (21) pour recevoir les données d'image et, les données d'image étant fournies depuis le dispositif externe par l'intermédiaire de l'interface de communication ;
   un premier moyen de stockage (11) pour maintenir les données d'image et les informations quant à quel type de traitement d'image doit être effectué qui sont reçues par le premier moyen de réception ; et
   **caractérise en ce que** le premier moyen de réception est en outre destiné a recevoir des informations quant à quel type de traitement d'image doit être effectué sur les données d'image, les informations étant fournies depuis le dispositif externe par l'intermédiaire de l'interface de communication ; et pair
   un premier moyen de conversion de format de données (24) pour convertir un premier format de données qui est le format de données des données d'image en un second format de données avant que le traitement d'image prédéterminé soit effectué ;
   dans lequel le moyen de traitement d'image effectue le traitement d'image prédétermine selon les informations quant à quel type de traitement d'image doit être effectué, les informations étant reçues par le premier moyen de réception.

2. Appareil de formation d'image selon la revendication 1, comprenant en outre :

   un lecteur d'image (12) pour lire un manuscrit d'image comme les données d'image ; et
   un second moyen de stockage pour maintenir les données d'image dans le second format de données.

3. Appareil de formation d'image selon la revendication 2, dans lequel le moyen de traitement d'image (15) effectue le traitement d'image prédéterminé selon des types des données d'image qui sont lues par le lecteur d'image et maintenues dans le second format de données.

4. Appareil de formation d'image selon l'une quelconque des revendications précédentes, comprenant en outre :

   un second moyen de stockage pour maintenir les données d'image dans le second format de données ;
   un second moyen de réception pour recevoir une demande de transmission des données d'image à une destination prédéterminée ;
   un seconde moyen de conversion de format de données (24) pour convertir le format de données des données d'imagé maintenues par le second moyen de stockage à second format de données au premier format de données ; et
   un moyen de transmission pour transmettre les données d'image converties à la destination prédéterminée.

5. Appareil de formation d'image selon l'une quelconque des revendications précédentes, dans lequel le moyen de traitement d'image (15) effectue un traitement de demi-teinte.

6. Appareil de formation d'image selon l'une quelconque des revendications précédentes, dans lequel le moyen de traitement d'image (15) effectue un traitement de réglage de densité d'image pour ajuster l'obscurité/luminosité de l'image.

7. Appareil de formation d'image selon l'une quelconque des revendications précédentes , comprenant en outre :

   un second moyen de conversion de format de données (24) pour convertir le format de données des données d'image du second format de données au premier format de données.

8. Appareil de formation d'image selon la revendication 7, dans lequel un format de données universel sert de premier format de données et de second format de données.

9. Appareil de formation d'image selon soit la revendication 7 soit la revendication 8, dans lequel un format de données

**EP 1 487 189 B1**

propre a l'appareil de formation d'image sert de second format de données, et un format de données universel sert de premier format de données.

10. Appareil de formation d'image selon l'une quelconque des revendications 7 à 9, dans lequel le format de données propre à l'appareil de formation sert de premier format de données et de second format de données.

11. Appareil de formation d'image selon l'une quelconque des revendications précédentes, dans lequel l'espace de couleurs des données d'image dans le premier format de données utilise par le premier moyen due conversion de format de données est différent de l'espace de couleurs des données d'image dans le second format de données.

12. Appareil de formation d'image selon l'une quelconque des revendications précédentes, dans lequel la résolution des données d'image dans le premier format de données utilisé par le premier moyen de conversion de format de données est différente de la résolution des données d'image dans le second format de données.

13. Appareil de formation d'image selon l'une quelconque des revendications 7 à 12, dans lequel le premier moyen de conversion de format de données (24) et le second moyen de conversion de format de données (24) effectuent un traitement de filtrage spatial sur une des données d'image dans le premier format de données et des données d'image dans le second format de données.

14. Appareil de formation d'image selon l'une quelconque des revendications 7 à 13, dans lequel le premier moyen de conversion de format de données (24) et le second moyen de conversion de format de données (24) effectuent un traitement de compensation de gamma sur une des données d'image dans le premier format de données et des données d'image dans le second format de données.

15. Procédé de formation d'image pour contrôler un appareil de formation d'image (1) équipé d'un moteur d'imprimante pour former une image sur un support, et d'une interface de communication pour communiquer avec un dispositif externe, comprenant :

une étape de traitement d'image pour effectuer un traitement d'image prédéterminé sur des données d'image devant être utilisées pour la formation d'image ;
une étape de formation d'image pour former l'image par le moteur d'imprimante sur la base des données d'image qui sont traitées à l'étape de traitement d'image ;
une première étape de réception pour recevoir les données d'image, les données d'image étant fournies depuis le dispositif externe par l'intermédiaire de l'interface de communication ;
une première étape de stockage pour maintenir les données d'image et les informations quant à quel type de traitement d'image doit être effectué qui sont reçues à la première étape de réception ; et
**caractérisé en ce que** la première étape de réception est en outre destinée à recevoir des informations quant à quel type de traitement d'image doit être effectué sur les données d'image, les informations étant fourniers depuis le dispositif externe par l'intermédiaire de l'interface de communication ; et par
une première étape de conversion de format de données pour convertir un premier format de données qui est le format de données des données d'image en un second format de données avant le traitement d'image prédéterminé :

dans lequel l'étape de traitement d'image effectue le traitement d'image prédéterminé selon les informations quant à quel type de traitement d'image doit être effectué, les informations étant reçues à la première étape de réception.

16. Procédé de formation d'image selon la revendication 15, pour contrôler l'appareil de formation d'image qui est en outre équipé d'un lecteur d'image pour lire un manuscrit d'image comme les données d'image, comprenant en outre :

une seconde étape de stockage pour maintenir les données d'image dans le second format de données.

17. Procède de formation d'image selon soit la revendication 15 soit la revendication 16, dans lequel l'étape de traitement d'image effectue le traitement d'image prédéterminé selon des types des données d'image qui sont lues par le lecteur d'image et maintenues dans le second format de données.

18. Procédé de formation d'image selon l'une quelconque des revendications 15 à 17, comprenant en outre
une seconde étape de stockage pour maintenir les données d'image dans le second format de données ;

17

une seconde étape de réception pour recevoir une demande de transmission des données d'image à une destination prédéterminée ;
une seconde étape de conversion de format de données pour convertir le format de données des données d'image maintenues à la seconde étape de stockage du second format de données au premier format de données ; et
une étape de transmission pour transmettre les données d'image converties à la destination prédéterminée.

19. Procédé de formation d'image selon l'une quelconque des revendications 15 à 18, dans lequel l'étape de traitement d'image effectue un traitement de demi-teinte.

20. Procédé de formation d'image selon l'une quelconque des revendications 15 à 19, dans lequel l'étape de traitement d'image effectue un traitement de réglage de densité d'image pour ajuster l'obscurité/luminosité de l'image.

21. Ordinateur comprenant un moyen de code de programme qui, lorsqu'il est exécuté sur un système informatique, donne pour instruction à un appareil de formation d'image équipé d'un moteur d'imprimante pour former une image sur un support, et d'une interface de communication, pour communiquer avec une dispositif externe d'effectuer les étapes selon l'une quelconque des revendications 15 à 20.

22. Support de stockage lisible par ordinateur ayant enregistré dessus un moyen de code de programme qui, lorsqu'il est exécute sur un système informatique, donne pour instruction à l'appareil de formation d'image équipé d'un moteur d'imprimante pour former une image sur un support, et d'une interface de communication pour communiquer avec un dispositif externe d'effectuer les étapes selon l'une quelconque des revendications 15 à 20.

FIG.1

# FIG.2

RGB → [4 SCANNER GAMMA COMPENSATION UNIT] → RGB → [5 FILTERING UNIT] → RGB → [6 COLOR COMPENSATION UNIT] → CMYK → [7 VARIABLE MULTIPLIER UNIT] → CMYK

13

# FIG.3

CMYK → [16 PRINTER GAMMA COMPENSATION UNIT] → CMYK 4×8bit → [17 HALFTONE PROCESSING UNIT] → CMYK 4×2bit

15

EP 1 487 189 B1

# FIG.4

26 ~ MAIN CONTROLLER

1

25

9

22

2

21 — FAX CONTROLLER

COMPRESSION/ EXPANSION UNIT

21a

NIC

PRINTER CONTROLLER ~ 10

3

12 — READING UNIT

RGB

13 — SCANNER COMPENSATION UNIT

CMYK

8 — COMPRESSION UNIT

COMPRESSION/ EXPANSION UNIT

HDD ~ 11

10a

a

20 ~ ENGINE CONTROLLER

CPU BUS

14 — EXPANSION UNIT

CMYK

15 ~ PRINTER COMPENSATION UNIT

MEMORY C

MEMORY M

MEMORY Y

MEMORY K ~ 10b

19 ~ IMAGE FORMATION UNIT

b

DATA FORMAT CONVERSION UNIT ~ 24

EP 1 487 189 B1

# FIG.5

SECOND DATA FORMAT ———→ CONVERSION UNIT ———→ FIRST DATA FORMAT

24a

24

SECOND DATA FORMAT ←——— CONVERSION UNIT ←——— FIRST DATA FORMAT

24b

# FIG.6

17

| ERROR DIFFUSION UNIT | 102 | |
|---|---|---|
| DITHER UNIT | 103 | SEL |
| DITHER UNIT | 104 | 105 |
| FEATURE AMOUNT EXTRACTION UNIT | 101 | |

# FIG.7

# FIG.8

DATA FORMAT CONVERSION UNIT

| INPUT PORT | EXPANSION UNIT | COLOR SPACE CONVERSION UNIT | COMPRESSION UNIT | OUTPUT PORT |
|---|---|---|---|---|
| 31 | 32 | 34 | 35 | 36 |

GENERAL-PURPOSE BUS 9

24a

EP 1 487 189 B1

# FIG.9

EP 1 487 189 B1

# FIG.10

# FIG.11

EP 1 487 189 B1

# FIG.12

DATA FORMAT CONVERSION UNIT

24a'

INPUT DATA
IN EXCLUSIVE
DATA FORMAT

**32'**
EXPANSION UNIT
(BLOCK
FIXED-LENGTH
EXPANSION)

MULTI-VALUE
DATA

**37**
IMAGE
PROCESSING
UNIT

MULTI-VALUE
DATA

**35'**
COMPRESSION
UNIT
(JPEG
COMPRESSION)

OUTPUT DATA IN
GENERAL-PURPOSE
DATA FORMAT

# FIG.13

DATA FORMAT CONVERSION UNIT

24b'

INPUT DATA IN
GENERAL-PURPOSE
DATA FORMAT

**32'**
EXPANSION
UNIT
(JPEG
EXPANSION)

MULTI-VALUE
DATA

**37**
IMAGE
PROCESSING
UNIT

MULTI-VALUE
DATA

**35'**
COMPRESSION UNIT
(BLOCK
FIXED-LENGTH
COMPRESSION)

OUTPUT DATA
IN EXCLUSIVE
DATA FORMAT

EP 1 487 189 B1

# FIG.14A

41   42   33

INPUT
MULTI-
VALUE
DATA

| RESOLUTION CONVERSION BLOCK IN MAIN SCANNING DIRECTION | RESOLUTION CONVERSION BLOCK IN SUB-SCANNING DIRECTION |

OUTPUT
MULTI-
VALUE
DATA

# FIG.14B

RESOLUTION CONVERSION BLOCK
IN MAIN SCANNING DIRECTION

43

INPUT
MULTI-VALUE
DATA

FF → FF —— FF → FF

41

44

INTERPOLATION PIXEL
CALCULATING UNIT

TO RESOLUTION
CONVERSION BLOCK
IN SUB-SCANNING
DIRECTION

# FIG.14C

RESOLUTION CONVERSION BLOCK
IN SUB-SCANNING DIRECTION

SUB-SCANNING
LINE MEMORY    45    47

MULTI-VALUE DATA
AFTER RESOLUTION
CONVERSION IN MAIN
SCANNING DIRECTION

SINGLE-LINE
MEMORY UNIT

SINGLE-LINE
MEMORY UNIT

INTERPOLATION
PIXEL
CALCULATING
UNIT

OUTPUT
MULTI-
VALUE
DATA

42

46

SINGLE-LINE
MEMORY UNIT

SINGLE-LINE
MEMORY UNIT

**FIG.15A**

**FIG.15B**

PLANE OF x=y

P7

P1

P3

P5

P

P2   P8

P6   PLANE OF x=z

P4

PLANE OF y=z

**FIG.15C**

P5

P

P2

P6

P4

—— ORIGINAL IMAGE DATA

----- IMAGE DATA AFTER FILTERING

**FIG.16A**

DYNAMIC RANGE OF IMAGE DATA

—— ORIGINAL IMAGE DATA

----- IMAGE DATA AFTER FILTERING

**FIG.16B**

DYNAMIC RANGE OF IMAGE DATA

X DIRECTION

Y DIRECTION

**FIG.16C**

| Xn-2, m-2 | Xn-2, m-1 | Xn-2, m | Xn-2, m+1 | Xn-2, m+2 |
| Xn-1, m-2 | Xn-1, m-1 | Xn-1, m | Xn-1, m+1 | Xn-1, m+2 |
| Xn, m-2 | Xn, m-1 | Xn, m | Xn, m+1 | Xn, m+2 |
| Xn+1, m-2 | Xn+1, m-1 | Xn+1, m | Xn+1, m+1 | Xn+1, m+2 |
| Xn+2, m-2 | Xn+2, m-1 | Xn+2, m | Xn+2, m+1 | Xn+2, m+2 |

Xn, m   TARGET PIXEL

# FIG.17A

DYNAMIC RANGE OF ORIGINAL IMAGE DATA

# FIG.17B

DENSITY OF ENTIRE IMAGE CHANGED
WITHOUT CHANGING DENSITY INCLINATION

LINEAR GAMMA CONVERSION TABLE

DENSITY INCLINATION CHANGED

DYNAMIC RANGE OF ORIGINAL IMAGE DATA

# FIG.18

```
                    ┌─────────────┐
                    │    START    │
                    └─────────────┘
                           │
                           ▼
              ┌────────────────────────────┐
              ╱          IMAGE              ╲        N
    S1 ──< CAPTURE REQUEST SIGNAL >─────────┐
              ╲        RECEIVED?            ╱         │
               └──────────────────────────┘          │
                           │ Y                        │
                           ▼                          │
         ┌────────────────────────────────────┐      │
   S2 ───│      IMAGE DATA PARAMETER           │      │
         │        VALUES DETERMINED            │      │
         └────────────────────────────────────┘      │
                           │                          │
                           ▼                          │
         ┌────────────────────────────────────┐      │
   S3 ───│       DATA FORMAT CONVERSION        │      │
         └────────────────────────────────────┘      │
                           │                          │
                           ▼                          │
         ┌────────────────────────────────────┐      │
   S4 ───│           TRANSMISSION             │      │
         └────────────────────────────────────┘      │
                           │                          │
                           ▼                          │
                    ┌─────────────┐                   │
                    │     END     │                   │
                    └─────────────┘                   │
```

# FIG.19

```
          START

           │
           ▼
S11 ～   ◇ IMAGE              N
        DATA TAKE-IN REQUEST ──┐
        RECEIVED?              │
           │ Y                 │
           ▼                   │
S12 ～  ┌────────────────────┐ │
        │ DATA FORMAT CONVERSION │
        └────────────────────┘ │
           │                   │
           ▼                   │
S13 ～  ┌────────────────────┐ │
        │ IMAGE DATA STORED  │ │
        └────────────────────┘ │
           │
           ▼
          END
```

# FIG.20

```
          START

           │
           ▼
S21 ～   ◇ IMAGE               N
        FORMATION REQUEST ──┐
        RECEIVED?           │
           │ Y              │
           ▼                │
S22 ～  ┌──────────────────────┐ │
        │ PROCESS AT PRINTER   │ │
        │ COMPENSATION UNIT    │ │
        └──────────────────────┘ │
           │                  │
           ▼                  │
S23 ～  ┌──────────────────────┐ │
        │ IMAGE FORMATION CARRIED OUT │
        └──────────────────────┘
           │
           ▼
          END
```

# FIG.21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000333026 A

- US 6069706 A